# EUROPEAN PATENT APPLICATION

(11) **EP 1 850 618 A1**
(43) Date of publication of application: **31.10.2007**
(21) Application number: 06300417.0
(22) Date of filing: 28.04.2006
(51) Int. Cl.: H04Q 7/38

(54) **A method for access by a mobile station to a core network via an unlicensed mobile access network**

(71) Applicant: Alcatel Lucent, 75008 Paris (FR)
(72) Inventor: Bultinck, Alain, 91310, LONGPONT SUR ORGE (FR); Pierre, Jean-Paul, 92330, SCEAUX (FR)
(74) Representative: El Manouni, Josiane

(57) **Abstract**

A method for access to a Core Network CN via an Unlicensed Mobile Access Network/Generic Access Network UMAN/GAN, by a dual mode Mobile Station MS supporting access to said CN either via said UMAN/GAN or via a Radio Access Network RAN, said method comprising the steps of, in a non active state of said MS:
- detecting if said MS is under coverage of both UMAN/GAN and RAN,
- if it is detected that said MS is under coverage of both UMAN/GAN and RAN, selecting a RAN cell for camping on by the MS.

## Description

The present invention generally relates to mobile communication systems.

Detailed descriptions of mobile communication systems can be found in the litterature, in particular in Technical Specifications published by standardisation bodies such as for example 3GPP (3^{rd} Generation Partnership Project). It is simply recalled that a mobile communication network is logically divided into Access Network AN and Core Network CN, and that Mobile Stations MS have access to services delivered by the CN via an AN.

The present invention more particularly relates to fixed/mobile convergence.

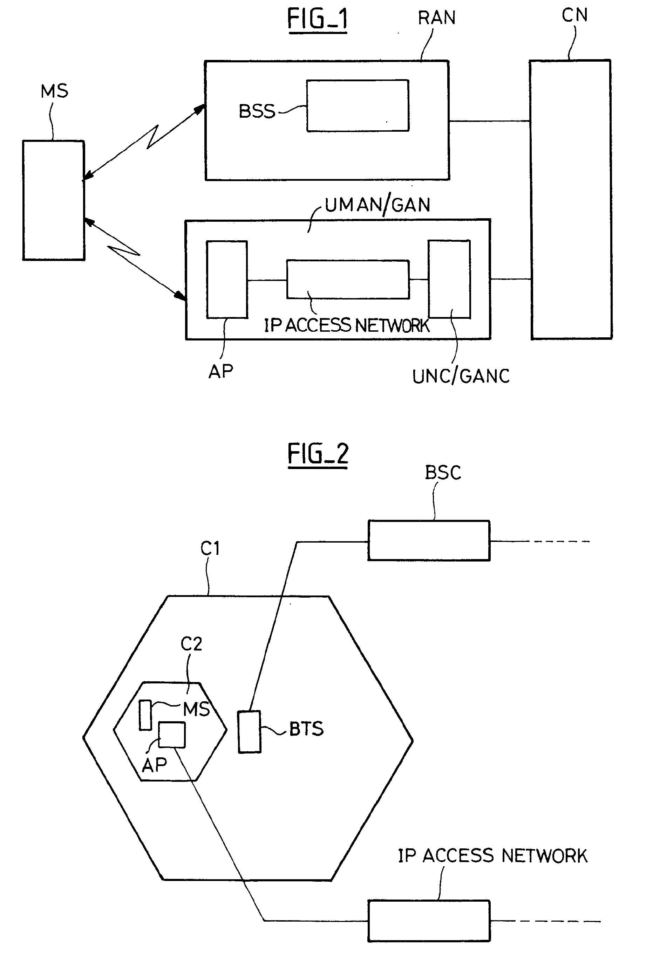

An example of architecture for fixed/mobile convergence is recalled in figure 1. In this example, a MS has access to the CN:
- either via an AN called Radio Access Network (RAN), such as GERAN (GSM/EDGE Radio Access Network) or UTRAN (Universal Terrestrial Radio Access Network), a description of which can be found in particular in 3GPP Technical Specifications,
- or via an AN called UMAN/GAN (Unlicensed Mobile Access Network / Generic Access Network) providing a complement to traditional GERAN/UTRAN coverage; a description of UMAN/GAN can be found in particular in UMA/3GPP specifications (in particular 3GPP TS 43.318).

As recalled in figure 1, the architecture for UMAN/GAN comprises the following elements :
- AP (Access Point),
- IP Access Network,
- UNC/GANC (Unlicensed Network Controller / Generic Access Network Controller).

AP provides a radio link towards a Mobile Station (MS), using wireless technologies such as Wi-Fi (Wireless Fidelity), Bluetooth, ...etc. IP Access Network provides connectivity between AP and UNC/GANC. UNC/GANC appears to the CN as a Base Station Subsystem (BSS) of GERAN or a Radio Network Subsystem (RNS) of UTRAN. Transaction control and user services are provided by the CN. MSs are dual mode Mobile Stations supporting access to the CN either via UMAN/GAN or via RAN.

In such a context, the present invention recognizes that there is a need to optimize the operations performed by such dual mode MSs, in particular in a so called non active state (also referred to as idle mode) where the MS is not actively engaged in a communication but has to stay in contact with the network, in particular to be paged for an incoming call or session.

In case of access via RAN, such operations performed by a MS in a non active state mainly include the selection of a cell to be camped on, and the sending of Location Updates to the CN if necessary, in particular in case of change of LA/RA (Location Area/Routing Area). Such operations do not cost too much power consumption; indeed, radio reception operations needed for cell selection do not consume too much power, and radio transmission operations needed for Location Updates only occur from time to time.

In case of access via UMAN/GAN, such operations performed by a MS in a non active state mainly include the selection of an appropriate serving AP, and operations necessary for attaching to this serving AP and to a serving UNC/GANC. Radio reception operations needed for AP selection do not cost too much power consumption; however radio transmission operations needed for attaching to a serving AP and to a serving UNC/GANC cost a significantly higher power consumption, thereby significantly reducing the battery life of the MS.

It is an object of the present invention to optimize such operations performed by MSs, in particular to save power consumption and to increase battery life.

These and other objects are achieved, in one aspect of the present invention, by a method for access to a Core Network CN via an Unlicensed Mobile Access Network/Generic Access Network UMAN/GAN, by a dual mode Mobile Station MS supporting access to said CN either via said UMAN/GAN or via a Radio Access Network RAN, said method comprising the steps of, in a non active state of said MS:
- detecting if said MS is under coverage of both UMAN/GAN and RAN,
- if it is detected that said MS is under coverage of both UMAN/GAN and RAN, selecting a RAN cell for camping on by the MS.

These and other objects are achieved, in another aspect of the present invention, by a Mobile Station, and a network entity such as UNC/GANC, for performing said method.

These and other objects of the present invention will become more apparent from the following description taken in conjunction with the accompanying drawings:
- figure 1 is intended to recall the architecture of a system wherein a dual mode MS has access to a CN either via UMAN/GAN or via RAN,
- figure 2 is intended to illustrate an example of a MS located under coverage of both UMAN/GAN and RAN,
- figures 3 and 4 are intended to illustrate two embodiments of a method according to the present invention.

The same elements in different figures are noted with the same references.

The present invention may also be explained as follows.

The present invention in particular proposes, when the MS is located on both RAN and UMAN/GAN coverage, i.e. for example when the MS in a GSM cell coverage detects that the Wi-Fi/Bluetooth signal is sufficient to camp on a UMAN/GAN cell, that the MS camps only on the GSM cell.

In other words, according to one aspect of the present invention, there is proposed a method for access to a CN via UMAN/GAN, by a Mobile Station MS supporting access to CN either via UMAN/GAN or via RAN, said method comprising the steps of, in a non active state of the MS:
- detecting if the MS is under coverage of both UMAN/GAN and RAN,
- if it is detected that the MS is under coverage of both UMAN/GAN and RAN, selecting a RAN cell for camping on by the MS.

In the example of figure 2, there is schematically illustrated a MS which is under coverage of both RAN and UMAN/GAN. In this example, the MS is in a RAN cell noted C1 (such as for example a GSM cell, served by a Base Transceiver Station BTS), corresponding to an "umbrella cell" for a UMAN/GAN cell noted C2 served by an Access Point AP. In this example, the cell which would be selected for camping on by the MS would be the GSM cell C1.

In fgures 3 and 4, there is illustrated an example of the different steps of a method according to the present invention, and of the different entities involved in these different steps, i.e. MS, CN, RAN entity (such as for example Base Station Controller BSC for GERAN) and UMAN/GAN entity (such as UNC/GANC).

In step S1, a MS in a non active state detects if it is under coverage of both RAN and UMAN/GAN.

In step S2, upon detection that it is under coverage of both RAN and UMAN/GAN, the MS selects a RAN cell for camping on.

A Location Update procedure is possibly performed in step S3, such possibility being illustrated with dotted lines.

As illustrated by step S4, as a result the MS is located by the CN in the Location Area LA to which the selected RAN cell belongs.

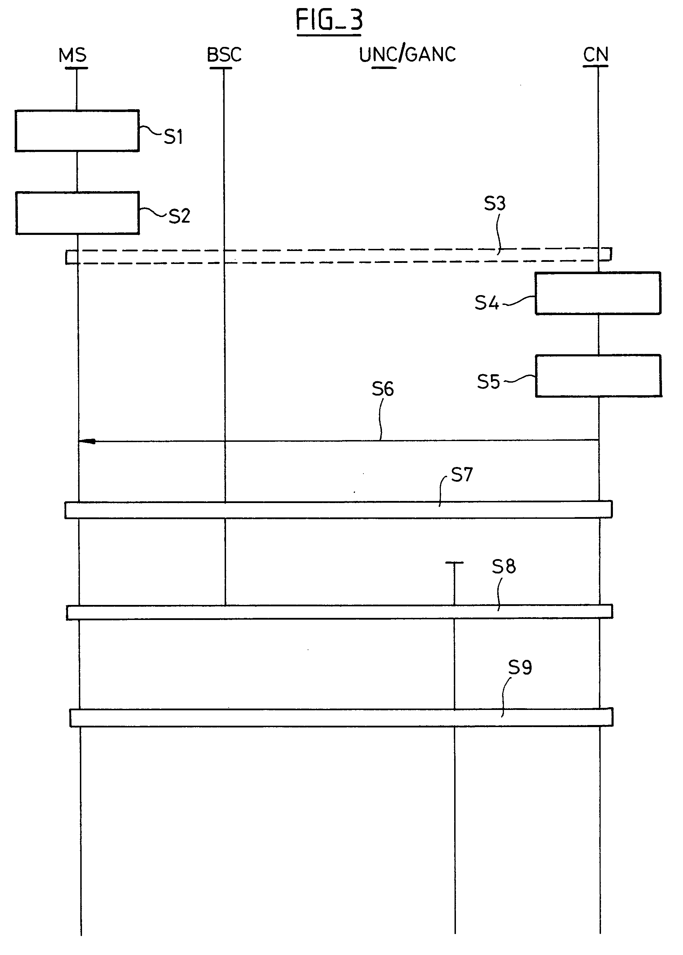

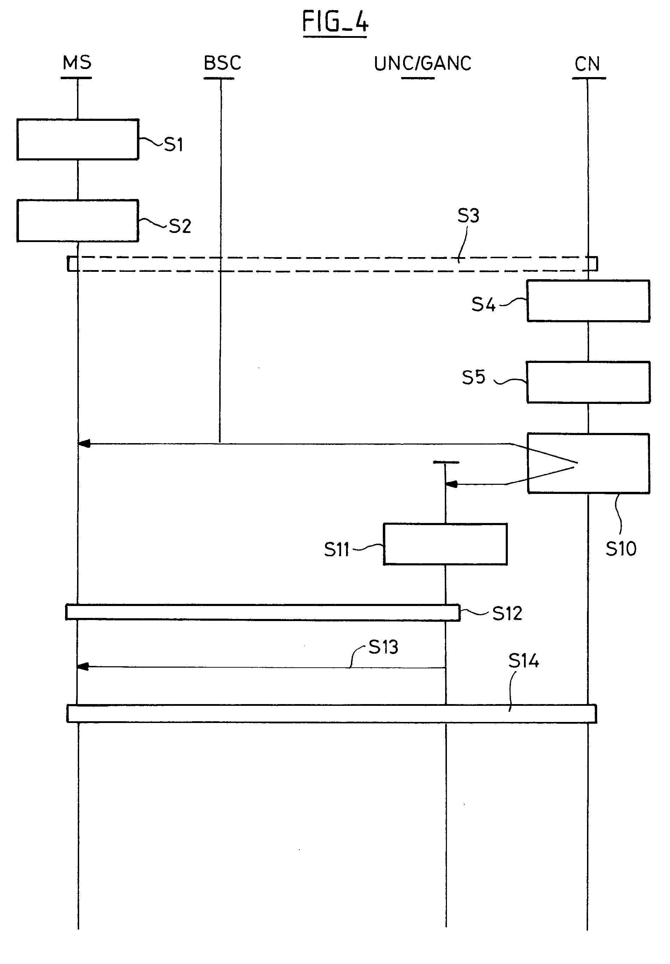

The first steps S1 to S4 illustrated in the example of figures 3 and 4 therefore correspond to the steps performed in a non active state of a MS, for access by the MS to the CN via UMAN/GAN.

The next steps illustrated in figures 3 and 4 correspond to the steps performed for transition from a non active state to an active state, upon reception by the CN of an incoming call for the MS.

A first embodiment illustrated in figure 3 corresponds to the case where the UMAN/GAN cell and the RAN cell (as illustrated for example in figure 2) belong to different Location Areas LAs.

In this case, in the example of figure 3, the steps performed upon reception by the CN of an incoming call for the MS are as follows.

In step S5, an incoming call for the MS is received at the CN.

In step S6, the CN sends a paging request to the MS via the RAN/BSC.

In step S7, the paging procedure is completed, and a call is established according to usual procedures between MS and CN via the RAN/BSC (such usual procedures not being recalled here and being disclosed for example in 3GPP TS 24.008).

In step S8, a handover is performed from RAN to UMAN/GAN, according to usual procedures involving MS, RAN/BSC, UNC/GANC and CN (such usual procedures not being recalled here and being disclosed for example in 3GPP TS 43.318). In the example illustrated in figure 2, the target cell for this handover would correspond to UMAN/GAN cell C2.

In step S9, as a result, the incoming call for the MS is established via UMAN/GAN.

In other words, taking again the example where the MS is located in a GSM cell and in a UMAN/GAN cell, the MS is only located by the CN in GSM BSS, the newtork pages the MS though GSM BSS and the MS answers to the paging and accepts the call as usual. But once the call is established, the MS initiates a hand-over towards the GAN cell; in this situation the scarce GSM resource is saved.

In another aspect, with this first embodiment, the present invention can be considered as introducing a new cause of handover from RAN to UMAN/GAN, corresponding to the case where a MS and under both coverage of RAN and UMAN/GAN, selects a RAN cell for camping on in a non active state.

Still in other words, and according to another aspect of the present invention, there is proposed a method comprising the steps of, upon reception by the CN of an incoming call for the MS, and in the case where the MS is in a UMAN/GAN cell and in a RAN cell which belong to different Location Areas:
- sending a paging request by the CN to the MS via the RAN,
- establishing a call between the CN and the MS via the RAN,
- performing a handover from RAN to UMAN/GAN.

A second embodiment illustrated in figure 4 corresponds to a case where the UMAN/GAN cell and the RAN cell (as illustrated for example in figure 2) belong to a same Location Area LA.

In this case, in the example of figure 4, the steps performed upon reception by the CN of an incoming call for the MS are as follows.

In step S5, an incoming call for the MS is received at the CN.

In step S10, the CN simultaneously sends a paging request to the MS via the RAN/BSC, and to the UNC/GANC.

In step S11, upon reception of the paging request by the UNC/GANC, the UNC/GANC stores this paging request.

In step S12, upon reception of the paging request by the MS, an attachment procedure via the UMAN/GAN is performed, initiated by the MS.

In step S13, upon completion of this attachment procedure, the UNC/GANC sends the stored paging request to the MS.

In step S14, the paging procedure is completed, and a call is established via UMAN/GAN, according to usual procedures (such usual procedures not being recalled here and being disclosed for example in 3GPP TS 43.318).

In other words, taking again the example where the MS is located in a GSM cell and in a UMAN/GAN cell, the CN will page the MS both through the BSS and the UMAN/GAN server. The standard behaviour of the MS is modified, and the standard behaviour of the UMAN/GAN server is modified in response to the paging stimuli.

The MS behaviour is modified in the sense that it does not answer to the GSM paging. Furthermore, it is this paging stimuli that launch in the MS the UMAN/GAN attachment phase.

The UMAN/GAN server behaviour is modified in the sense that when it receives from the CN a paging command for a MS that is not already attached, it doesn't abandon the paging process: the UMAN/GAN server in this case stores the paging command during a period guard to allow the MS to attach to the UMAN/GAN server. When the MS is attached to the UMAN/GAN server, this one forwards the paging command to the MS.

It should be noted that the paging command is definitively abandoned by the UMAN/GAN server after the guard period and the non reachable MS is sent back to the CN to palliate failure case (if the MS cannot successfully attach itself to the AP).

Still in other words, and according to another aspect of the present invention, there is proposed a method comprising the steps of, upon reception by the CN of an incoming call for the MS, and in the case where the MS is in a UMAN/GAN cell and in a RAN cell which belong to a same Location Area :
- sending a paging request by the CN on the one hand to the MS via the RAN, and and on the other hand to the UMAN/GAN,
- upon reception of said paging request by the UMAN/GAN, storing said paging request in the UMAN/GAN,
- upon reception of said paging request by the MS, initiating an attachment procedure via the UMAN/GAN,
- upon completion of said attachment procedure, sending the stored paging request by the UMAN/GAN to the MS,
- establishing a call between the CN and the MS via the UMAN/GAN.

The present invention also has for its object a Mobile Station MS and a network entity such as UNC/GANC, for performing said method.

In another of its different aspects, the present invention therefore has for its object a MS supporting access to the CN either via UMAN/GAN or via RAN, comprising:
- means for, in a non active state, detecting if it is under coverage of both UMAN/GAN and RAN,
- means for, if it is detected that it is under coverage of both UMAN/GAN and RAN, selecting a RAN cell for camping on.

In one embodiment, the MS further comprises :
- means for, upon establishing a call between the CN and the MS via the RAN, performing a handover of said call from RAN to UMAN/GAN.

In another embodiment, the MS further comprises :
- means for, upon reception of a paging request sent by the CN via RAN, initiating an attachment procedure via UMAN/GAN.

In another of its different aspects, the present invention therefore has for its object a UMAN/GAN entity such as UNC/GANC, comprising:
- means for, upon reception of a paging request from the CN, for a MS not already attached via UMAN/GAN, storing said paging request,
- means for, upon completion of an attachment procedure via UMAN/GAN for said MS, sending the stored paging request to said MS via UMAN/GAN.

The detailed implementation of the above-mentioned means does not raise any special problem for a person skilled in the art, and therefore such means do not need to be more fully disclosed than has been made above, by their function, for a person skilled in the art.

## Claims

1. A method for access to a Core Network CN via an Unlicensed Mobile Access Network/Generic Access Network UMAN/GAN, by a dual mode Mobile Station MS supporting access to said CN either via said UMAN/GAN or via a Radio Access Network RAN, said method comprising the steps of, in a non active state of said MS:
- detecting if said MS is under coverage of both UMAN/GAN and RAN,
- if it is detected that said MS is under coverage of both UMAN/GAN and RAN, selecting a RAN cell for camping on by the MS.

2. A method according to claim 1, comprising the steps of, upon reception by the CN of an incoming call for the MS, and in case where the MS is in a UMAN/GAN cell and in a RAN cell which belong to different Location Areas :
- sending a paging request by the CN to the MS via the RAN,
- establishing a call between the CN and the MS via the RAN,
- performing a handover from RAN to UMAN/GAN.

3. A method according to claim 1, comprising the steps of, upon reception by the CN of an incoming call for the MS, and in case where the MS is in a UMAN/GAN cell and in a RAN cell which belong to a same Location Area :
- sending a paging request by the CN on the one hand to the MS via the RAN, and and on the other hand to the UMAN/GAN,
- upon reception of said paging request by the UMAN/GAN, storing said paging request in the UMAN/GAN,
- upon reception of said paging request by the MS, initiating an attachment procedure via the UMAN/GAN,
- upon completion of said attachment procedure, sending the stored paging request by the UMAN/GAN to the MS,
- establishing a call between the CN and the MS via the UMAN/GAN.

4. A Mobile Station MS supporting access to a Core Network CN either via an Unlicensed Mobile Access Network/Generic Access Network UMAN/GAN or via a Radio Access Network RAN, comprising:
- means for, in a non active state, detecting if said MS is under coverage of both UMAN/GAN and RAN,
- means for, if it is detected that said MS is under coverage of both UMAN/GAN and RAN, selecting a RAN cell for camping on by the MS.

5. A Mobile Station MS according to claim 4, comprising :
- means for, upon establishing a call between the CN and the MS via the RAN, performing a handover of said call from RAN to UMAN/GAN.

6. A Mobile Station MS according to claim 4, comprising :
- means for, upon reception of a paging request sent by the CN via the RAN, initiating an attachment procedure via the UMAN/GAN.

7. A Unlicensed Mobile Network Controller/Generic Access Network Controller UNC/GANC, comprising:
- means for, upon reception of a paging request from the Core Network CN, for a Mobile Station MS not already attached via Unlicensed Mobile Access Network/Generic Access Network UMAN/GAN, storing said paging request,
- means for, upon completion of an attachment procedure via UMAN/GAN for said MS, sending the stored paging request to the MS via UMAN/GAN.
